(19) Europäisches Patentamt / European Patent Office / Office européen des brevets

(11) **EP 3 734 725 A1**

(12) **EUROPEAN PATENT APPLICATION**
published in accordance with Art. 153(4) EPC

(43) Date of publication:
**04.11.2020 Bulletin 2020/45**

(51) Int Cl.:
*H01M 4/62* (2006.01)   *C08F 212/10* (2006.01)
*H01M 4/13* (2010.01)   *H01M 4/139* (2010.01)
*H01M 10/0566* (2010.01)   *H01M 10/052* (2010.01)

(21) Application number: 18894102.5

(22) Date of filing: **14.12.2018**

(86) International application number:
**PCT/JP2018/046076**

(87) International publication number:
**WO 2019/131211 (04.07.2019 Gazette 2019/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2017   JP 2017254290**

(71) Applicant: **Zeon Corporation
Tokyo 100-8246 (JP)**

(72) Inventor: **ITO Yukie
Tokyo 100-8246 (JP)**

(74) Representative: **Parchmann, Stefanie
Maiwald Patentanwalts- und
Rechtsanwaltsgesellschaft mbH
Elisenhof
Elisenstraße 3
80335 München (DE)**

(54) **BINDER COMPOSITION FOR SECONDARY BATTERY POSITIVE ELECTRODE, SLURRY COMPOSITION FOR SECONDARY BATTERY POSITIVE ELECTRODE AND METHOD FOR PRODUCING SAME, POSITIVE ELECTRODE FOR SECONDARY BATTERY, AND SECONDARY BATTERY**

(57)   A binder composition for a secondary battery positive electrode comprises a polymer containing a nitrile group-containing monomer unit, an aromatic vinyl monomer unit, a hydrophilic group-containing monomer unit, and a linear alkylene structural unit having a carbon number of 4 or more, wherein the polymer contains the aromatic vinyl monomer unit in a proportion of more than 50.0 mass% and 65.0 mass% or less.

EP 3 734 725 A1

**Description**

TECHNICAL FIELD

The present disclosure relates to a binder composition for a secondary battery positive electrode, a slurry composition for a secondary battery positive electrode and a production method therefor, a positive electrode for a secondary battery, and a secondary battery.

BACKGROUND

Secondary batteries such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher secondary battery performance.

A positive electrode used for a secondary battery such as a lithium ion secondary battery generally includes a current collector and an electrode mixed material layer (positive electrode mixed material layer) formed on the current collector. The positive electrode mixed material layer is formed, for example, using a slurry composition in which a positive electrode active material, a binder composition containing a binder, and so forth are dispersed in a dispersion medium.

In recent years, there have been attempts to improve binder compositions used in the formation of positive electrode mixed material layers in order to further improve secondary battery performance.

Specifically, for example, PTL 1 proposes a binder composition for a secondary battery positive electrode that is a binder containing a nitrile group-containing polymer unit, an aromatic vinyl polymer unit, a hydrophilic group-containing polymer unit, and a linear alkylene polymer unit having a carbon number of 4 or more, wherein the content proportion of the aromatic vinyl polymer unit is 5 mass% to 50 mass%. With use of such a binder composition, a secondary battery excellent in cycle characteristics and the like can be provided.

CITATION LIST

Patent Literature

PTL 1: JP 2013-179040 A

SUMMARY

(Technical Problem)

When the conventional binder composition for a positive electrode described above is used to prepare a slurry composition, it may be difficult to achieve both adjustment of the viscosity of the slurry composition to an appropriate range and appropriate control of the swelling property in electrolyte solution of the binder contained in a positive electrode formed using the obtained slurry composition. Thus, in the case where the conventional binder composition for a positive electrode is used to form a positive electrode and the positive electrode is used to form a secondary battery, there is room for improvement in terms of the output characteristics of the secondary battery.

It could therefore be helpful to provide a binder composition for a secondary battery positive electrode containing a polymer that has an adequate degree of swelling in electrolyte solution and is capable of adjusting, in the case of preparing a slurry composition, the viscosity of the obtained slurry composition to an appropriate range.

It could also be helpful to provide a slurry composition for a secondary battery positive electrode that has appropriate viscosity and can be used in formation of a secondary battery excellent in output characteristics, and a production method therefor.

It could also be helpful to provide a positive electrode capable of improving the output characteristics of a secondary battery, and a secondary battery excellent in output characteristics.

(Solution to Problem)

Through extensive studies to solve the problems, the inventor discovered the following: In a binder composition for a secondary battery positive electrode comprising a polymer containing a nitrile group-containing monomer unit, an aromatic vinyl monomer unit, a hydrophilic group-containing monomer unit, and a linear alkylene structural unit having a carbon number of 4 or more, the polymer in which the proportion of the aromatic vinyl monomer unit is within a predetermined range has an adequate degree of swelling in electrolyte solution. Containing such a polymer in a slurry composition can optimize the viscosity of the slurry composition. Further, such a slurry composition can be used to obtain a secondary battery excellent in output characteristics.

To advantageously solve the problems stated above, a binder composition for a secondary battery positive electrode according to the present disclosure is a binder composition for a secondary battery positive electrode comprising a polymer containing a nitrile group-containing monomer unit, an aromatic vinyl monomer unit, a hydrophilic group-containing monomer unit, and a linear alkylene structural unit having a carbon number of 4 or more, wherein the polymer contains the aromatic vinyl monomer unit in a proportion of more than 50.0 mass% and 65.0 mass% or less. As a result of the content proportion of the aromatic vinyl monomer unit in the polymer being adjusted to more than 50.0 mass% and 65.0 mass% or less, the polymer has an adequate degree of swelling in electrolyte solution. Moreover, a slurry composition prepared using the binder composition containing the polymer has appropriate viscosity.

Herein, the expression that the polymer "contains a monomer unit" means that "a structural unit derived from the monomer is included in the polymer obtained using the monomer". The expression "contains a linear alkylene structural unit having a carbon number of 4 or more" means that a repeating unit formed by only a linear alkylene structure represented by the general formula: $-C_nH_{2n}-$ (where n is an integer of 4 or more) is included in the polymer. The content proportion of a monomer unit in the polymer can be measured, for example, by $^1$H-NMR. The "degree of swelling in electrolyte solution" of the polymer can be measured by the method described in the EXAMPLES section.

Preferably, in the binder composition for a secondary battery positive electrode according to the present disclosure, the polymer contains the nitrile group-containing monomer unit in a proportion of 3.0 mass% or more and 30.0 mass% or less. As a result of the content proportion of the nitrile group-containing monomer unit in the polymer being 3.0 mass% or more and 30.0 mass% or less, the viscosity of the slurry composition can be further optimized, and the output characteristics of the secondary battery including the obtained positive electrode can be further enhanced.

Preferably, in the binder composition for a secondary battery positive electrode according to the present disclosure, the polymer contains an acidic group-containing monomer unit as the hydrophilic group-containing monomer unit in a proportion of 0.1 mass% or more and 20.0 mass% or less. As a result of the content proportion of the acidic group-containing monomer in the polymer being 0.1 mass% or more and 20.0 mass% or less, the viscosity of the slurry composition can be further optimized, and the output characteristics of the secondary battery including the obtained positive electrode can be further enhanced.

Preferably, in the binder composition for a secondary battery positive electrode according to the present disclosure, a glass-transition temperature of the polymer is 10 °C or more and 60 °C or less. As a result of the glass-transition temperature of the polymer being 10 °C or more and 60 °C or less, the electrode obtained using the binder composition can be densified.

The "glass-transition temperature" of the polymer can be measured in accordance with JIS K7121 (1987).

Preferably, in the binder composition for a secondary battery positive electrode according to the present disclosure, an iodine value of the polymer is 5 mg/100 mg or more and 80 mg/100 mg or less. As a result of the iodine value of the polymer being 5 mg/100 mg or more and 80 mg/100 mg or less, the viscosity of the obtained slurry composition can be optimized further effectively.

The "iodine value" of the polymer can be measured in accordance with JIS K6235 (2006).

To advantageously solve the problems stated above, a slurry composition for a secondary battery positive electrode according to the present disclosure comprises a positive electrode active material, a solvent, and any of the foregoing binder compositions for a secondary battery positive electrode. As a result of using the foregoing binder composition for a secondary battery positive electrode, the viscosity of the slurry composition can be optimized.

To advantageously solve the problems stated above, a positive electrode for a secondary battery according to the present disclosure comprises a positive electrode mixed material layer formed using the foregoing slurry composition for a secondary battery positive electrode. As a result of using the foregoing slurry composition for a secondary battery positive electrode, a positive electrode for a secondary battery capable of improving the output characteristics of a secondary battery can be obtained.

To advantageously solve the problems stated above, a secondary battery according to the present disclosure comprises: the foregoing positive electrode for a secondary battery; a negative electrode; an electrolyte solution; and a separator. As a result of using the foregoing positive electrode for a secondary battery, the output characteristics of the secondary battery can be enhanced.

To advantageously solve the problems stated above, a production method for a slurry composition for a secondary battery positive electrode according to the present disclosure comprises, in the stated order: mixing a positive electrode active material and a conductive material to obtain a positive electrode active material-conductive material mixture; adding any of the foregoing binder compositions for a secondary battery positive electrode to the positive electrode active material-conductive material mixture, to obtain a positive electrode active material-conductive material-binder mixture; and adding a solvent to the positive electrode active material-conductive material-binder mixture to mix the solvent and the positive electrode active material-conductive material-binder mixture. With such a production method, a slurry composition for a secondary battery positive electrode excellent in the dispersibility of the conductive material can be obtained.

(Advantageous Effect)

It is therefore possible to provide a binder composition for a secondary battery positive electrode containing a polymer that has an adequate degree of swelling in electrolyte solution and is capable of adjusting, in the case of preparing a slurry composition, the viscosity of the obtained slurry composition to an appropriate range.

It is also possible to provide a slurry composition for a secondary battery positive electrode that has appropriate viscosity and can be used in formation of a secondary battery excellent in output characteristics, and a production method therefor.

It is also possible to provide a positive electrode for a secondary battery capable of improving the output characteristics of a secondary battery, and a secondary battery excellent in output characteristics.

DETAILED DESCRIPTION

One of the disclosed embodiments will be described in detail below.

A binder composition for a secondary battery positive electrode according to the present disclosure can be used when preparing a slurry composition for a secondary battery positive electrode. The slurry composition for a secondary battery positive electrode prepared using the binder composition for a secondary battery positive electrode according to the present disclosure can be used when forming a positive electrode of a secondary battery such as a lithium ion secondary battery. A secondary battery according to the present disclosure uses a positive electrode for a secondary battery formed using the slurry composition for a secondary battery positive electrode according to the present disclosure.

(Binder composition for secondary battery positive electrode)

The binder composition for a secondary battery positive electrode according to the present disclosure includes a polymer containing a nitrile group-containing monomer unit, an aromatic vinyl monomer unit, a hydrophilic group-containing monomer unit, and a linear alkylene structural unit having a carbon number of 4 or more. In the binder composition for a secondary battery positive electrode according to the present disclosure, the polymer contains the aromatic vinyl monomer unit in a proportion of more than 50.0 mass% and 65.0 mass% or less.

The polymer of the foregoing composition can favorably disperse solid content including a positive electrode active material and the like, in a slurry composition. More specifically, the polymer of the foregoing composition, particularly as a result of containing the aromatic vinyl monomer unit in a range of more than 50.0 mass% and 65.0 mass% or less, can effectively suppress both aggregation and excessively dispersion of the solid content in the slurry composition. Moreover, the polymer of the foregoing composition can favorably dissolve in a solvent in the slurry composition, thus adequately enhancing the viscosity of the slurry composition. Further, the polymer of the foregoing composition does not have an excessively high degree of swelling in electrolyte solution. With the binder composition according to the present disclosure including the polymer that can achieve these advantageous effects, the viscosity of the obtained slurry composition can be optimized, and the output characteristics of the obtained secondary battery can be enhanced.

<Polymer>

The polymer is a component functioning as a binder, and, in a positive electrode produced by forming a positive electrode mixed material layer on a current collector using a slurry composition for a secondary battery positive electrode prepared using the binder composition, holds the components included in the positive electrode mixed material layer to prevent separation of these components from the positive electrode mixed material layer. It is necessary that the polymer contains a nitrile group-containing monomer unit, an aromatic vinyl monomer unit, a hydrophilic group-containing monomer unit, and a linear alkylene structural unit having a carbon number of 4 or more, and the content proportion of the aromatic vinyl monomer unit is more than 50.0 mass% and 65.0 mass% or less. The polymer may optionally contain other monomer units so long as the effects of the present disclosure are not lost. The polymer is preferably a hydrogenated polymer obtained by hydrogenating, by a known method, a polymer obtained by polymerizing a monomer composition that contains a nitrile group-containing monomer, an aromatic vinyl monomer, a hydrophilic group-containing monomer, and a conjugated diene monomer and optionally further contains other monomers.

[Nitrile group-containing monomer unit]

The nitrile group-containing monomer unit is a repeating unit derived from a nitrile group-containing monomer. Since the polymer contains the nitrile group-containing monomer unit, the polymer has high solubility in an organic solvent such as N-methylpyrrolidone, so that the viscosity of the obtained slurry composition can be favorably enhanced. In addition, by suppressing viscosity change with time, the viscosity stability of the slurry composition can be favorably enhanced.

Examples of nitrile group-containing monomers that can form the nitrile group-containing monomer unit include an $\alpha,\beta$-ethylenically unsaturated nitrile monomer. The $\alpha,\beta$-ethylenically unsaturated nitrile monomer is not specifically limited other than being an $\alpha,\beta$-ethylenically unsaturated compound that has a nitrile group, and specific examples include acrylonitrile; $\alpha$-halogenoacrylonitrile such as $\alpha$-chloroacrylonitrile and $\alpha$-bromoacrylonitrile; and $\alpha$-alkylacrylonitrile such as methacrylonitrile and $\alpha$-ethylacrylonitrile. Of these monomers, the nitrile group-containing monomer is preferably acrylonitrile or methacrylonitrile, and is more preferably acrylonitrile, in terms of enhancing the binding strength of the polymer.

Any one of such nitrile group-containing monomers may be used individually, or any two or more of such nitrile group-containing monomers may be used in combination.

The content proportion of the nitrile group-containing monomer unit in the polymer is preferably 3 mass% or more, more preferably 6 mass% or more, and further preferably 10 mass% or more, and is preferably 30 mass% or less, and more preferably 20 mass% or less, where the proportion of all repeating units in the polymer is taken to be 100 mass%. As a result of the content proportion of the nitrile group-containing monomer unit in the polymer being not less than the foregoing lower limit, the output characteristics of the obtained secondary battery can be further enhanced. This is presumed to be because, as a result of the content proportion of the nitrile group-containing monomer unit having high polarity being not less than the foregoing lower limit, the softening temperature of the polymer is increased adequately, with it being possible to improve the binding strength of the polymer and enhance the peel strength of the positive electrode formed using the binder composition. Thus, the close adherence between the positive electrode mixed material layer and the current collector can be enhanced to reduce the internal resistance of the secondary battery, so that the output characteristics of the secondary battery can be further enhanced. As a result of the content proportion of the nitrile group-containing monomer unit in the polymer being not more than the foregoing upper limit, an excessive increase in the degree of swelling in electrolyte solution of the polymer can be favorably suppressed. Hence, the internal resistance of the secondary battery can be reduced, so that the output characteristics of the secondary battery can be further enhanced.

The "content proportion of the nitrile group-containing monomer unit" and the below-described "content proportion of the aromatic vinyl monomer unit" in the polymer preferably satisfy the relationship: $0.05 \leq$ (the content proportion of the nitrile group-containing monomer unit [mass%])/(the content proportion of the aromatic vinyl monomer unit [mass%]) $\leq 0.6$, and more preferably satisfy the relationship: $0.10 \leq$ (the content proportion of the nitrile group-containing monomer unit [mass%])/(the content proportion of the aromatic vinyl monomer unit [mass%]) $\leq 0.35$. If such relationship is satisfied, it is possible to both enhance the solubility of the polymer in an organic solvent such as NMP and enhance the output characteristics of the obtained secondary battery further favorably.

[Aromatic vinyl monomer unit]

The aromatic vinyl monomer unit is a repeating unit derived from an aromatic vinyl monomer. Since the polymer contains the aromatic vinyl monomer unit in a content proportion within the foregoing range, in the case where the polymer is contained in the slurry composition, solid content can be favorably dispersed, and an excessive increase in the degree of swelling in electrolyte solution can be suppressed.

Examples of monomers that can form the aromatic vinyl polymer unit include aromatic vinyl monomers such as styrene, $\alpha$-methylstyrene, and vinyltoluene. Of these monomers, styrene is preferable because of favorable copolymerizability with other monomers and relatively little side reaction such as branch, chain, or intermolecular crosslinking of the polymer.

The content proportion of the aromatic vinyl monomer unit in the polymer needs to be more than 50.0 mass% and 65.0 mass% or less, and further preferably 60 mass% or less, where the proportion of all repeating units in the polymer is taken to be 100 mass%. As a result of the content proportion of the aromatic vinyl monomer unit in the polymer being not less than the foregoing lower limit, the viscosity stability of the slurry composition including the binder composition can be enhanced, and the dispersibility of solid content can be adequately enhanced. As a result of the content proportion of the aromatic vinyl monomer unit in the polymer being not more than the foregoing upper limit, an excessive increase in the degree of swelling in electrolyte solution of the polymer can be suppressed, and the output characteristics of the obtained secondary battery can be enhanced. As a result of the blending amount of the aromatic vinyl monomer unit being not more than the foregoing upper limit, an excessive increase in the glass-transition temperature of the polymer can be suppressed, and, in the case of performing a step of pressing under heating conditions when forming the electrode, the electrode can be densified effectively. In this case, the output characteristics of the secondary battery including the obtained electrode can be further enhanced.

[Hydrophilic group-containing monomer unit]

The hydrophilic group-containing monomer unit is a repeating unit derived from a hydrophilic group-containing monomer. Since the polymer contains the hydrophilic group-containing monomer unit, the polymer has high solubility in an organic solvent such as N-methylpyrrolidone, so that the viscosity of the obtained slurry composition can be favorably enhanced. In addition, by suppressing viscosity change with time, the viscosity stability of the slurry composition can be favorably enhanced.

Examples of hydrophilic group-containing monomers that can form the hydrophilic group-containing monomer unit include acidic group-containing monomers, hydroxy group-containing monomers, and monomers having salts thereof. Examples of acidic groups that can be contained in the acidic group-containing monomers include a carboxy group, a sulfo group, and a phosphate group. Herein, a unit that can correspond to the foregoing nitrile group-containing monomer unit or aromatic vinyl monomer unit and has a hydrophilic group is included not in the nitrile group-containing monomer unit or the aromatic vinyl monomer unit but in the hydrophilic group-containing monomer unit.

Examples of monomers having a carboxy group include monocarboxylic acids, derivatives of monocarboxylic acids, dicarboxylic acids, and derivatives of dicarboxylic acids.

Examples of monocarboxylic acids include acrylic acid, methacrylic acid, and crotonic acid.

Examples of monocarboxylic acid derivatives include 2-ethylacrylic acid, isocrotonic acid, $\alpha$-acetoxy acrylic acid, $\beta$-trans-aryloxy acrylic acid, $\alpha$-chloro-$\beta$-E-methoxy acrylic acid, and $\beta$-diamino acrylic acid.

Examples of dicarboxylic acids include maleic acid, fumaric acid, and itaconic acid.

Examples of derivatives of dicarboxylic acids include methyl maleic acid, dimethyl maleic acid, phenyl maleic acid, chloromaleic acid, dichloromaleic acid, fluoromaleic acid, and maleic acid esters such as methylallyl maleate, diphenyl maleate, nonyl maleate, decyl maleate, dodecyl maleate, octadecyl maleate, and fluoroalkyl maleate.

Furthermore, an acid anhydride that produces a carboxyl group upon hydrolysis can also be used.

Examples of acid anhydrides of dicarboxylic acids include maleic anhydride, acrylic acid anhydride, methyl maleic anhydride, and dimethyl maleic anhydride.

Other examples include monoesters and diesters of $\alpha,\beta$-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of monomers having a sulfo group include vinyl sulfonic acid, methyl vinyl sulfonic acid, (meth)allyl sulfonic acid, styrene sulfonic acid, (meth)acrylic acid-2-sulfoethyl, 2-acrylamido-2-methylpropane sulfonic acid, and 3-allyloxy-2-hydroxypropane sulfonic acid.

Examples of monomers having a phosphate group include 2-(meth)acryloyloxyethyl phosphate, methyl-2-(meth)acryloyloxy ethyl phosphate, and ethyl-(meth)acryloyloxyethyl phosphate.

Examples of monomers having a hydroxyl group include ethylenic unsaturated alcohol, such as (meth)allyl alcohol, 3-butene-1-ol, and 5-hexene-1-ol; alkanol esters of ethylenic unsaturated carboxylic acid, such as 2-hydroxyethyl-acrylate, 2-hydroxypropyl-acrylate, 2-hydroxyethyl-methacrylate, 2-hydroxypropyl-methacrylate, di-2-hydroxyethyl-maleate, di-4-hydroxybutyl maleate, and di-2-hydroxypropyl itaconate; esters of (meth)acrylic acid and polyalkylene glycol represented by the general formula $CH_2 = CR^1\text{-}COO\text{-}(C_nH_{2n}O)_m\text{-}H$ (where m represents an integer from 2 to 9, n represents an integer from 2 to 4, and R1 represents hydrogen or a methyl group); mono(meth)acrylic acid esters of dihydroxy ester of dicarboxylic acid, such as 2-hydroxyethyl-2'-(meth)acryloyl oxyphthalate and 2-hydroxyethyl-2'-(meth)acryloyl oxysuccinate; vinyl ethers, such as 2-hydroxyethyl vinyl ether and 2-hydroxypropyl vinyl ether; mono(meth)allyl ethers of alkylene glycol, such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol (meth)monoallyl ethers, such as diethylene glycol mono(meth)allyl ether and dipropylene glycol mono(meth)allyl ether; glycerin mono(meth)allyl ether; mono(meth)allyl ether of halogen or hydroxy substitution of (poly)alkylene glycol, such as (meth)allyl-2-chloro-3-hydroxypropyl ether and (meth)allyl-2-hydroxy-3-chloropropyl ether; mono(meth)allyl ether of polyhydric phenol, such as eugenol and isoeugenol, and a halogen substitution thereof; and (meth)allyl thioethers of alkylene glycol, such as (meth)allyl-2-hydroxyethyl thioether and (meth)allyl-2-hydroxypropyl thioether.

Of these, the hydrophilic group-containing monomer is preferably an acidic group-containing monomer and is a monomer having a carboxy group or a sulfo group in terms of excellent binding capacity in the positive electrode active material and excellent binding capacity between the positive electrode mixed material layer and the below-described current collector, and is particularly preferably a monomer having a carboxy group in terms of efficiently capturing transition metal ions that may be eluted from the positive electrode active material.

The content proportion of the hydrophilic group-containing monomer unit in the polymer is preferably 0.1 mass% or more, and is preferably 20.0 mass% or less, more preferably 10.0 mass% or less, and further preferably 5.0 mass% or less, where the proportion of all repeating units in the polymer is taken to be 100 mass%. As a result of the content proportion of the hydrophilic group-containing monomer unit in the polymer being not less than the foregoing lower limit, the output characteristics of the obtained secondary battery can be further enhanced. The reason for this is not clear, but is presumed to be because the hydrophilic group-containing monomer unit contained in the polymer functions to enhance the close adherence between the positive electrode mixed material layer and the current collector and reduce the internal resistance of the secondary battery, as in the case of the nitrile group-containing monomer unit. As a result of the content proportion of the hydrophilic group-containing monomer unit in the polymer being not more than the foregoing upper limit, an excessive increase in the degree of swelling in electrolyte solution of the polymer can be suppressed further effectively. Hence, the output characteristics of the obtained secondary battery can be further enhanced. Moreover, as a result of the content proportion of the hydrophilic group-containing monomer unit in the polymer being not more than the foregoing upper limit, an excessive increase in the viscosity of the slurry composition can be suppressed effectively.

[Linear alkylene structural unit having carbon number of 4 or more]

The linear alkylene structural unit having a carbon number of 4 or more (hereafter also simply referred to as "alkylene structural unit") is a repeating unit composed only of a linear alkylene structure having a carbon number of 4 or more expressed by the general formula: $-C_nH_{2n}-$ [where n is an integer of 4 or more]. Since the polymer contains the linear alkylene structural unit having a carbon number of 4 or more, an excessive increase in the degree of swelling in electrolyte solution of the polymer can be suppressed further effectively.

Although no specific limitations are placed on the method by which the linear alkylene structural unit having a carbon number of 4 or more is introduced into the polymer, the methods described below in (1) and (2) may for example be used:

(1) A method involving preparing a polymer from a monomer composition containing a conjugated diene monomer and hydrogenating the resultant polymer in order to convert the conjugated diene monomer unit to a linear alkylene structural unit having a carbon number of 4 or more.
(2) A method involving preparing a polymer from a monomer composition containing a 1-olefin monomer having a carbon number of 4 or more, such as 1-butene or 1-hexene.

The conjugated diene monomer or the 1-olefin monomer may be one type used individually, or may be two or more types used in combination.

Of these methods, the method described in (1) is preferable in terms of ease of production of the polymer.

Examples of the conjugated diene monomer that can be used in the method described in (1) include conjugated diene compounds having a carbon number of 4 or more such as 1,3-butadiene, isoprene, 2,3-dimethyl-1,3-butadiene, and 1,3-pentadiene. Of these conjugated diene compounds, 1,3-butadiene is preferable. In other words, the linear alkylene structural unit having a carbon number of 4 or more is preferably a structural unit obtained through hydrogenation of a conjugated diene monomer unit (i.e. the alkylene structural unit is preferably a hydrogenated conjugated diene unit), and is more preferably a structural unit obtained through hydrogenation of a 1,3-butadiene unit (i.e. the alkylene structural unit is more preferably a hydrogenated 1,3-butadiene unit). Selective hydrogenation of the conjugated diene monomer unit can, for example, be carried out by a commonly known method such as an oil-layer hydrogenation method or a water-layer hydrogenation method.

The content proportion of the linear alkylene structural unit having a carbon number of 4 or more in the polymer is preferably 15 mass% or more, and more preferably 20 mass% or more, and is preferably 50 mass% or less, more preferably 40 mass% or less, and further preferably 30 mass% or less, where the proportion of all repeating units (total of structural units and monomer units) in the polymer is taken to be 100 mass%. As a result of the content proportion of the linear alkylene structural unit having a carbon number of 4 or more being in the foregoing range, an excessive increase in the degree of swelling in electrolyte solution of the polymer can be suppressed further effectively.

In the case where the polymer is a hydrogenated polymer obtained by hydrogenating a polymer obtained by polymerizing a monomer composition containing a conjugated diene as mentioned above, the hydrogenated polymer can contain a linear alkylene structural unit having a carbon number of 4 or more and a unit derived from another conjugated diene (for example, contain a non-hydrogenated conjugated diene unit). In this case, the total content proportion of the linear alkylene structural unit having a carbon number of 4 or more and the unit derived from the other conjugated diene (hereafter also referred to as "content proportion of a conjugated diene-derived unit") in the hydrogenated polymer is preferably in the preferred content proportion range described above with regard to the "content proportion of the linear alkylene structural unit having a carbon number of 4 or more". As a result of the total proportion of the content proportion of the conjugated diene-derived unit being in this range, an excessive increase in the degree of swelling in electrolyte solution of the polymer can be suppressed further effectively.

For example, the content proportion of the linear alkylene structural unit in the case where the polymer is a hydrogenated polymer obtained by hydrogenating a polymer obtained by polymerizing a monomer composition containing 1,3-butadiene as a conjugated diene can be determined based on the proportions of a 1,2-addition butadiene unit and a 1,4-addition butadiene unit contained in the polymer before hydrogenation, measured using $^1$H-NMR or the like, and the proportion of a non-hydrogenated 1,4-addition butadiene unit calculated using an iodine value or the like measured for the hydrogenated polymer.

Moreover, the "content proportion of the conjugated diene-derived unit" and the foregoing "content proportion of the aromatic vinyl monomer unit" in the polymer preferably satisfy the relationship: $0.2 \leq$ (the content proportion of the conjugated diene-derived unit [mass%])/(the content proportion of the aromatic vinyl monomer unit [mass%]) $\leq 0.8$, and more preferably satisfy the relationship: $0.3 \leq$ (the content proportion of the conjugated diene-derived unit [mass%])/(the content proportion of the aromatic vinyl monomer unit [mass%]) $\leq 0.6$. If such relationship is satisfied, it is possible to both suppress an increase in the degree of swelling in electrolyte solution of the polymer and enhance the solubility of the polymer in an organic solvent such as NMP.

[Other monomer units]

Examples of other monomers that can form other monomer units include, but are not limited to, known monomers copolymerizable with the foregoing monomers, such as (meth)acrylic acid ester monomers.

One of such monomers may be used individually, or two or more of such monomers may be used in combination. Herein, "(meth)acryl" is used to indicate "acryl" and/or "methacryl".

Examples of (meth)acrylic acid ester monomers include: acrylic acid alkyl esters, such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters, such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

The content proportion of the other monomer units in the polymer is preferably 20 mass% or less, and more preferably 10 mass% or less.

[Iodine value]

The iodine value of the polymer is preferably 5 mg/100 mg or more, and more preferably 10 mg/100 mg or more, and is preferably 80 mg/100 mg or less, more preferably 60 mg/100 mg or less, and further preferably 50 mg/100 mg or less. As a result of the iodine value of the polymer being not less than the foregoing lower limit, the dispersibility of solid content in the slurry composition can be adequately enhanced, and the volume resistance of the obtained positive electrode can be reduced further favorably. As a result of the iodine value of the polymer being not more than the foregoing upper limit, an increase in the degree of swelling in electrolyte solution of the polymer can be suppressed further effectively, so that the output characteristics of the obtained secondary battery can be further improved. The iodine value of the polymer can be controlled, for example, by adjusting the composition of the polymer or, in the case where the polymer is a hydrogenation polymer, adjusting the percent hydrogenation.

[Glass-transition temperature]

The glass-transition temperature of the polymer is preferably 10 °C or more, and more preferably 15 °C or more, and is preferably 60 °C or less, more preferably 50 °C or less, and further preferably 45 °C or less. As a result of the glass-transition temperature of the polymer being in the foregoing range, in the case of performing a step of heating and pressing when producing a positive electrode using the binder composition, the electrode density can be enhanced efficiently. The volume resistance of the positive electrode obtained through such a step can be reduced effectively. The glass-transition temperature of the polymer can be controlled, for example, by adjusting the composition of the polymer or, in the case where the polymer is a hydrogenation polymer, adjusting the percent hydrogenation.

[Degree of swelling in electrolyte solution]

The degree of swelling in electrolyte solution of the polymer is preferably 400 % or less, more preferably 350 % or less, further preferably 300 % or less, and particularly preferably 280 % or less. The degree of swelling in electrolyte solution of the polymer is typically 100 % or more. As a result of the degree of swelling in electrolyte solution of the polymer being not more than the foregoing upper limit, the output characteristics of the obtained secondary battery can be improved. The degree of swelling in electrolyte solution of the polymer can be controlled, for example, by adjusting the composition of the polymer or, in the case where the polymer is a hydrogenation polymer, adjusting the percent hydrogenation.

[Preparation method for polymer]

The preparation method for the foregoing polymer is not limited. For example, the foregoing polymer can be prepared by polymerizing a monomer composition containing the foregoing monomers optionally in the presence of a chain transfer agent to obtain a polymer and then hydrogenating the obtained polymer.
The content proportion of each monomer in the monomer composition used in the preparation of the polymer can be set in accordance with the content proportion of the corresponding repeating unit in the polymer.
No specific limitations are placed on the mode of polymerization and a method such as solution polymerization, suspension polymerization, bulk polymerization, or emulsion polymerization can be used. Examples of types of polymerization reactions that can be used include ionic polymerization, radical polymerization, and living radical polymerization.
Although the method by which the polymer is hydrogenated is not specifically limited, the hydrogenation may be carried out by a typical method using a catalyst (for example, refer to WO 2012/165120 A1, WO 2013/080989 A1, and JP 2013-8485 A).

[Solvent]

The binder composition may contain a solvent. As the solvent, an organic solvent may be used, without being limited thereto. Examples of the organic solvent include alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide-based polar organic solvents such as N,N-dimethylformamide and N-methyl-2-pyrrolidone (NMP); and aromatic hydrocarbons such as toluene, xylene, chlorobenzene, ortho-dichlorobenzene, and para-dichlorobenzene. One of these organic solvents may be used individually, or two or more of these organic solvents may be used as a mixture. Of these, NMP is preferable as the solvent.

[Other components]

The binder composition according to the present disclosure may contain, in addition to the foregoing components, components such as a polymer that differs in composition from the foregoing polymer and known additives described in JP 2013-179040 A. One of these components may be used individually, or two or more of these components may be used in combination in a freely selected ratio.
Examples of the polymer that differs in composition from the foregoing polymer include fluorine-containing polymers such as polyvinylidene fluoride (PVDF); polyacrylonitrile; and polymethylmethacrylate. These polymers differ from the foregoing polymer in that at least one of a nitrile group-containing monomer unit, an aromatic vinyl monomer unit, a hydrophilic group-containing monomer unit, and a linear alkylene structural unit having a carbon number of 4 or more is not contained or, even though all of them are contained, the content proportion of the aromatic vinyl monomer unit is 50.0 mass% or less or more than 65.0 mass%.
The content proportion of the polymer that differs in composition from the foregoing polymer in the binder composition is preferably less than 50 mass%, and more preferably less than 20 mass%, where the total content of the foregoing polymer and the polymer that differs in composition from the foregoing polymer is taken to be 100 mass%. If the content proportion of the polymer that differs in composition from the foregoing polymer in the binder composition is not less than the foregoing upper limit, the viscosity optimization effect in the case of preparing the slurry composition may be insufficient.

(Slurry composition for secondary battery positive electrode)

The slurry composition for a secondary battery positive electrode according to the present disclosure contains a positive electrode active material, a solvent, and the foregoing binder composition, and optionally further contains a conductive material and other components. That is, the slurry composition for a secondary battery positive electrode according to the present disclosure contains a positive electrode active material, a solvent, and the foregoing polymer, and optionally further contains a conductive material and other components. Since the slurry composition for a secondary battery positive electrode according to the present disclosure contains the foregoing binder composition, the viscosity of the slurry composition is in the appropriate range.

The following will describe an example in which the slurry composition for a secondary battery positive electrode is a slurry composition for a lithium ion secondary battery positive electrode. However, the present disclosure is not limited to the following example.

<Positive electrode active material>

The positive electrode active material is a material that gives and receives electrons in the positive electrode of the secondary battery. As the positive electrode active material for a lithium ion secondary battery, a material that can occlude and release lithium is usually used.

Examples of the positive electrode active material for a lithium ion secondary battery include, but are not limited to, known positive electrode active materials such as lithium-containing cobalt oxide ($LiCoO_2$), lithium manganate ($LiMn_2O_4$), lithium-containing nickel oxide ($LiNiO_2$), lithium-containing composite oxide of Co-Ni-Mn, lithium-containing composite oxide of Ni-Mn-Al, lithium-containing composite oxide of Ni-Co-Al, olivine-type lithium iron phosphate ($LiFePO_4$), olivine-type manganese lithium phosphate ($LiMnPO_4$), lithium-rich spinel compounds represented by $Li_{1+x}Mn_{2-x}O_4$ (0 < X < 2), $Li[Ni_{0.17}Li_{0.2}Co_{0.07}Mn_{0.56}]O_2$, and $LiNi_{0.5}Mn_{1.5}O_4$. Examples of lithium-containing composite oxide of Co-Ni-Mn include $Li(Ni_{0.5}Co_{0.2}Mn_{0.3})O_2$ and $Li(Ni_{1/3}Co_{1/3}Mn_{1/3})O_2$.

Of these, as the positive electrode active material, lithium-containing cobalt oxide ($LiCoO_2$), lithium-containing nickel oxide ($LiNiO_2$), lithium-containing composite oxide of Co-Ni-Mn, $Li[Ni_{0.17}Li_{0.2}Co_{0.07}Mn_{0.56}]O_2$, and $LiNi_{0.5}Mn_{1.5}O_4$ are preferable, and lithium-containing composite oxide of Co-Ni-Mn is more preferable, in terms of improving the battery capacity of the secondary battery, etc.

The blending amount and the particle diameter of the positive electrode active material are not limited, and may be the same as those of conventionally used positive electrode active materials.

<Conductive material>

The conductive material ensures electrical contact within the positive electrode active material. Examples of conductive materials that can be used include conductive carbon materials such as carbon black (e.g. acetylene black, Ketjen black® (Ketjen black is a registered trademark in Japan, other countries, or both), furnace black), graphene, graphite, carbon fibers, carbon flakes, and carbon nanofibers (e.g. carbon nanotubes, vapor-grown carbon fibers); and various metal fibers or foil. Of these, as the conductive material, carbon black is preferable, and acetylene black is more preferable.

One of such conductive materials may be used individually, or two or more of such conductive materials may be used in combination.

<Binder composition>

As the binder composition, the foregoing binder composition for a secondary battery positive electrode according to the present disclosure is used.

<Solvent>

As the solvent, the same solvent as any of the various solvents listed as solvents that may be contained in the binder composition for a secondary battery positive electrode according to the present disclosure may be used.

<Content ratio>

The content ratio of the conductive material in the slurry composition is preferably 1 part by mass or more and 20 parts by mass or less, where the content of the positive electrode active material is taken to be 100 parts by mass. As a result of the ratio of the conductive material being not less than the foregoing lower limit, the electrical contact within the positive electrode active material can be promoted. As a result of the blending amount of the conductive material being not more than the foregoing upper limit, the viscosity stability of the slurry composition can be enhanced.

The content ratio of the polymer in the slurry composition is preferably 0.1 parts by mass or more and 3.1 parts by mass or less, where the content of the positive electrode active material is taken to be 100 parts by mass. As a result of the blending amount of the polymer being not less than the foregoing lower limit, the close adherence between the current collector and the positive electrode mixed material layer can be enhanced to thus enable formation of a positive electrode with low volume resistance. As a result of the blending amount of the polymer being not more than the foregoing upper limit, the proportion of the polymer in the positive electrode mixed material layer formed using the slurry composition can be kept from being excessively high, so that a decrease in the capacity of the secondary battery can be suppressed.

<Other components>

Other components that may be contained in the slurry composition are not limited, and may be the same components as the other components that may be contained in the binder composition according to the present disclosure. One other component may be used individually, or two or more other components may be used in combination in a freely selected ratio.

<Production method for slurry composition>

The foregoing slurry composition can be prepared by dissolving or dispersing the foregoing components in a solvent such as an organic solvent. Specifically, the foregoing components and the solvent may be mixed using a mixer such as a ball mill, a sand mill, a bead mill, a pigment disperser, a grinding machine, an ultrasonic disperser, a homogenizer, a planetary mixer, or a FILMIX to prepare the slurry composition. As the solvent used in the preparation of the slurry composition, the solvent contained in the binder composition may be used. The order in which the components are added in the preparation is not limited, and all of the foregoing components may be mixed collectively, or the foregoing components may be mixed stepwise. In terms of enhancing the dispersibility of the conductive material, it is preferable to perform a step of mixing the positive electrode active material and the conductive material to obtain a positive electrode active material-conductive material mixture, then perform a step of adding the binder composition to the positive electrode active material-conductive material mixture to obtain a positive electrode active material-conductive material-binder mixture, and then perform a step of adding the solvent to the positive electrode active material-conductive material-binder mixture to mix them. The step of obtaining the positive electrode active material-conductive material mixture is preferably performed in the absence of the solvent.

(Positive electrode for secondary battery)

The positive electrode for a secondary battery according to the present disclosure includes a current collector and a positive electrode mixed material layer formed on the current collector, wherein the positive electrode mixed material layer is formed using the foregoing slurry composition for a secondary battery positive electrode. That is, the positive electrode mixed material layer contains at least the positive electrode active material and the polymer. Components contained in the positive electrode mixed material layer are the same as the components contained in the foregoing slurry composition for a secondary battery positive electrode. The suitable ratios of these components in the positive electrode mixed material layer are the same as the suitable ratios of these components in the slurry composition.

The positive electrode for a secondary battery according to the present disclosure is produced using the slurry composition containing the binder composition for a secondary battery positive electrode according to the present disclosure, and therefore a secondary battery having favorable output characteristics can be obtained using the positive electrode.

<Production method for positive electrode>

The positive electrode for a secondary battery according to the present disclosure is produced, for example, through a step of applying the foregoing slurry composition onto the current collector (application step) and a step of drying the slurry composition that has been applied onto the current collector to form a positive electrode mixed material layer on the current collector (drying step).

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. The slurry composition may be applied onto one side or both sides of the current collector. The thickness of the slurry coating on the current collector after application but before drying may be set as appropriate in accordance with the thickness of the positive electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. Of these, aluminum foil is particularly preferable as the current collector used for the positive electrode. One of these materials may be used individually, or two or more of these materials may be used in combination in a freely selected ratio.

[Drying step]

The slurry composition that has been applied onto the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector as described above, the positive electrode mixed material layer is formed on the current collector, thereby providing a positive electrode for a secondary battery that includes the current collector and the positive electrode mixed material layer.

After the drying step, the positive electrode mixed material layer may be further subjected to pressing treatment, such as mold pressing or roll pressing. The pressing treatment can enhance the density of the positive electrode mixed material layer effectively, and improve the close adherence between the positive electrode mixed material layer and the current collector. Furthermore, when the positive electrode mixed material layer contains a curable polymer, the polymer is preferably cured after the positive electrode mixed material layer has been formed.

The slurry composition for a secondary battery positive electrode according to the present disclosure contains the foregoing predetermined polymer, and also has adequately high dispersibility of solid content. Hence, the positive electrode can be effectively densified by the pressing treatment. With use of the slurry composition for a secondary battery positive electrode according to the present disclosure, the battery characteristics of the secondary battery can be sufficiently improved even in the case where the pressing treatment is performed in the production of the positive electrode.

(Secondary battery)

The secondary battery according to the present disclosure includes a positive electrode, a negative electrode, an electrolyte solution, and a separator, wherein the positive electrode is the positive electrode for a secondary battery according to the present disclosure. The secondary battery according to the present disclosure includes the positive electrode for a secondary battery according to the present disclosure, and thus has excellent output characteristics.

The following will describe an example in which the secondary battery is a lithium ion secondary battery, although the present disclosure is not limited to the following example.

<Negative electrode>

The negative electrode may be any known negative electrode. Specifically, the negative electrode may for example be a negative electrode formed by a thin sheet of lithium metal or a negative electrode obtained by forming a negative electrode mixed material layer on a current collector.

The current collector may be made of a metal material such as iron, copper, aluminum, nickel, stainless steel, titanium, tantalum, gold, or platinum. The negative electrode mixed material layer may be a layer that contains a negative electrode active material and a binder. The binder is not specifically limited and may be freely selected from known materials.

<Electrolyte solution>

The electrolyte solution is normally an organic electrolyte solution in which a supporting electrolyte is dissolved in an organic solvent. For example, a supporting electrolyte of the lithium ion secondary battery is a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable and $LiPF_6$ is particularly preferable as these lithium salts readily dissolve in a solvent and exhibit a high degree of dissociation. The electrolyte may be one type used individually, or may be two or more types combined in a freely selected ratio. In general, lithium ion conductivity tends to increase when a supporting electrolyte having a high degree of dissociation is used. Therefore, lithium ion conductivity can be adjusted through the type of supporting electrolyte that is used. The concentration (25 °C) of the supporting electrolyte in the electrolyte solution may be, for example, 0.5 mol/L or more and 2.0 mol/L or less.

The organic solvent used in the electrolyte solution is not specifically limited so long as the supporting electrolyte can dissolve therein. Examples of organic solvents that can be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region. A mixture of ethylene carbonate and diethyl carbonate is preferably used. Any additives may be added to the electrolyte solution, such as vinylene carbonate (VC), fluoroethylene carbonate, and ethyl methyl sulfone. Of these additives, vinylene carbonate is preferably added.

<Separator>

Examples of the separator include, but are not specifically limited to, separators described in JP 2012-204303 A. Of these separators, a fine porous membrane made of polyolefinic resin (polyethylene, polypropylene, polybutene, or polyvinyl chloride) is preferred since such a membrane can reduce the total thickness of the separator, which increases the ratio of the electrode active material in the secondary battery, and consequently increases the capacity per unit volume.

<Production method for secondary battery>

The secondary battery according to the present disclosure can be produced, for example, by stacking the positive electrode and the negative electrode with the separator in-between, rolling or folding the resultant stack as necessary in accordance with the battery shape to place the stack in a battery vessel, filling the battery vessel with the electrolyte solution, and sealing the battery vessel. In order to prevent pressure increase inside the secondary battery and occurrence of overcharging or overdischarging, an overcurrent preventing device such as a PTC device or a fuse; an expanded metal; or a lead plate may be provided as necessary. The shape of the secondary battery may for example be a coin type, button type, sheet type, cylinder type, prismatic type, or flat type.

EXAMPLES

The following provides a more specific description of the present disclosure based on examples. However, the present disclosure is not limited to the following examples. In the following description, "%" and "parts" used in expressing quantities are by mass, unless otherwise specified. The pressure is gauge pressure.
In each of Examples and Comparative Examples, the composition, iodine value, glass-transition temperature, and degree of swelling of a polymer, the viscosity of a slurry composition, the volume resistance of a positive electrode, and the output characteristics of a secondary battery were measured and evaluated by the following methods.

<Composition of polymer>

100 g of a binder composition for a positive electrode prepared in each of Examples and Comparative Examples was coagulated with 1 L of methanol, and then vacuum dried at a temperature of 60 °C for 12 hours. The obtained dried polymer was analyzed by $^1$H-NMR. Based on the resultant analysis value, the content proportion (mass%) of each of the monomer units and the structural units contained in the polymer was calculated. In Table 1, the value in the "conjugated diene-derived unit" field corresponds to the total content of conjugated diene monomer-derived units blended in the monomer composition. That is, in all Examples and Comparative Examples, the value in the "conjugated diene-derived unit" field is the total proportion of a linear alkylene structural unit having a carbon number of 4 or more (hydrogenated 1,3-butadiene unit) and a non-hydrogenated conjugated diene unit (other 1,3-butadiene-derived unit). In all Examples and Comparative Examples, the presence of a linear alkylene structural unit having a carbon number of 4 or more (hydrogenated 1,3-butadiene unit) was confirmed.

<Iodine value of polymer>

100 g of a water dispersion or NMP dispersion (binder composition) of the polymer prepared in each of Examples and Comparative Examples was coagulated with 1 L of methanol, and then vacuum dried at a temperature of 60 °C for 12 hours. The iodine value of the obtained dried polymer was measured in accordance with JIS K6235 (2006).

<Glass-transition temperature of polymer>

The glass-transition temperature of a dried polymer produced in the same way as in the measurement of the foregoing <Composition of polymer> was measured in accordance with JIS K7121 (1987), using a differential scanning calorimeter (DSC 6220 produced by SII NanoTechnology Inc.).

<Degree of swelling of polymer>

The binder composition for a positive electrode obtained in each of Examples and Comparative Examples was cast on a polytetrafluoroethylene sheet and was dried to obtain a cast film. The cast film was cut to 4 cm$^2$, and the mass (mass A before immersion) was measured. Thereafter, the cast film was immersed in an electrolyte solution of a temperature of 60 °C. The immersed film was pulled out of the electrolyte solution after 72 hours, was wiped with a paper towel, and immediately the mass (mass B after immersion) was measured. The degree of swelling in electrolyte solution of the polymer was calculated according to the following formula (I), and evaluated based on the following criteria. A lower degree of swelling indicates that the polymer is more resistant to swelling in the electrolyte solution and a secondary battery containing the polymer has better output characteristics.

The electrolyte solution was prepared in the following manner: First, LiPF$_6$ with a concentration of 1.0 M was dissolved in a mixture of ethylene carbonate (EC) and diethyl carbonate (DEC) having a volume ratio of EC:DEC = 3:7 at 20 °C. Vinylene carbonate (VC) as an additive was then added to and mixed with the mixture having LiPF$_6$ dissolved therein at a concentration of 2 mass%, thus obtaining an electrolyte solution.

$$\text{Degree of swelling (\%)} = B/A \times 100 \ (\%) \qquad \ldots \quad (I).$$

A: 100 % or more and 300 % or less
B: more than 300 % and 400 % or less
C: more than 400 % and 500 % or less
D: more than 500 %.

<Viscosity of slurry composition>

A positive electrode active material, a conductive material, and a binder composition for a positive electrode were mixed, and N-methylpyrrolidone (NMP) was added to adjust the solid content concentration to 70 mass%, in the same way as in the step <Preparation of slurry composition for positive electrode> in each of Examples and Comparative Examples. The viscosity of the obtained slurry composition for a positive electrode was measured under a 23 °C condition using a B-type viscometer (rotational speed: 60 rpm), and evaluated based on the following criteria:

A: 4000 mPa·s or less
B: more than 4000 mPa·s and 5000 mPa·s or less
C: more than 5000 mPa·s.

<Volume resistance of positive electrode>

A positive electrode obtained in each of Examples and Comparative Examples was punched in a circular form of 12 mm in diameter. Using a tensile/compression tester (model "SV-301NA" manufactured by Imada Seisakusho Co., Ltd.) and an electrochemical measurement device (model "HSV-110" manufactured by Hokuto Denko Corporation), a current of 10 mA was applied while pressing at 2 kN under a 23 °C condition, and the voltage value after 10 minutes was read to measure the volume resistance value of the positive electrode, which was evaluated based on the following criteria:

A: 300 Ω· cm or less
B: more than 300 Ω·cm and 400 Ω·cm or less
C: more than 400 Ω·cm and 500 Ω·cm or less
D: more than 500 Ω·cm.

<Output characteristics of secondary battery>

A secondary battery produced in each of Examples and Comparative Examples was charged with constant current at 0.2 C until the battery voltage reached 4.2 V and then charged with constant voltage at 4.2 V until the charging current reached 0.02 C, under a 25 °C condition. Next, the secondary battery was discharged with constant current at 0.2 C until the battery voltage reached 3.0 V, and the initial capacity of the secondary battery was measured. After this, the secondary battery whose initial capacity had been measured was charged with constant current at 0.2 C until the battery voltage reached 4.2 V and then charged with constant voltage at 4.2 V until the charging current reached 0.02 C. Next, the secondary battery was discharged with constant current at 3 C until the battery voltage reached 3.0 V, and the 3 C capacity was measured. The output characteristics (= {(3 C capacity)/(initial capacity)} $\times$ 100 %) were calculated and evaluated based on the following criteria. The evaluation was performed in a 20 °C environment.

A: output characteristics of 92 % or more
B: output characteristics of 88 % or more and less than 92 %
C: output characteristics of 85 % or more and less than 88 %
D: less than 85 %.

(Example 1)

<Preparation of polymer>

An autoclave equipped with a stirrer was charged with, in the stated order, 240 parts of deionized water, 2.5 parts of sodium alkylbenzene sulfonate as an emulsifier, 11 parts of acrylonitrile as a nitrile group-containing monomer, 57 parts of styrene as an aromatic vinyl monomer, and 3 parts of methacrylic acid as a hydrophilic group-containing monomer. After the inside had been purged with nitrogen, 29 parts of 1,3-butadiene as a conjugated diene monomer was added under pressure, and 0.25 parts of ammonium persulfate was added as a polymerization initiator. A polymerization reaction was carried out at a reaction temperature of 40 °C, to yield a copolymer containing a nitrile group-containing monomer unit, an aromatic vinyl monomer unit, a hydrophilic group-containing monomer unit, and a conjugated diene monomer unit. The polymerization conversion rate was 85 %.

Deionized water was added to the polymer before hydrogenation, to prepare 400 ml (total solid content 48 g) of a solution having a total solid content concentration of 12 mass%. This solution was loaded into a 1 L autoclave equipped with a stirrer. Nitrogen gas was caused to flow for 10 minutes in order to remove oxygen dissolved in the solution. Thereafter, 75 mg of palladium acetate used as a hydrogenation reaction catalyst was dissolved in 180 ml of deionized water to which nitric acid had been added in an amount of four molar equivalents of the palladium (Pd), and the resultant solution was added into the autoclave. After purging the system twice with hydrogen gas, the contents of the autoclave were heated to 50 °C in a state in which the hydrogen gas pressure was raised to 3 MPa, and a hydrogenation reaction (first stage hydrogenation reaction) was carried out for 6 hours. The iodine value of the polymer that had undergone the first stage hydrogenation reaction was measured at 45 mg/100 mg, according to the foregoing method.

Next, the inside of the autoclave was returned to atmospheric pressure. In addition, 25 mg of palladium acetate used as a hydrogenation reaction catalyst was dissolved in 60 ml of water to which nitric acid had been added in an amount of four molar equivalents of Pd, and the resultant solution was added into the autoclave. After purging the system twice with hydrogen gas, the contents of the autoclave were heated to 50 °C in a state in which the hydrogen gas pressure was raised to 3 MPa, and a hydrogenation reaction (second stage hydrogenation reaction) was carried out for 6 hours.

Next, the contents of the autoclave were returned to room temperature and the system was changed to a nitrogen atmosphere. Thereafter, concentrating was performed using an evaporator until a solid content concentration of 40 % was reached to thereby yield a water dispersion of the polymer.

<Production of binder composition for positive electrode>

320 parts of N-methylpyrrolidone (hereafter referred to as "NMP") as a solvent was added to 100 parts of the obtained water dispersion of the polymer. Water was evaporated under reduced pressure, to obtain a binder composition for a positive electrode containing a predetermined polymer. The composition, iodine value, degree of swelling, and glass-transition temperature of the polymer were measured according to the foregoing methods. The results are shown in Table 1. The degree of swelling of the polymer measured according to the foregoing method was 280 %.

<Preparation of slurry composition for positive electrode>

96 parts of $Li(Ni_{0.5}Co_{0.2}Mn_{0.3})O_2$ (average particle diameter: 10 $\mu$m) as a positive electrode active material and 2.0 parts of acetylene black ("HS-100" manufactured by Denka Company Limited.) as a conductive material were mixed in a planetary mixer. 2.0 parts of the foregoing binder composition for a positive electrode (solid content concentration: 8.0 %) in terms of solid content was added to and mixed with the mixture, and then N-methylpyrrolidone (NMP) as a solvent was added and mixed so that the viscosity measured by a B-type viscometer (rotational speed: 60 rpm) would be 3500 mPa·s, to prepare a slurry composition for a positive electrode.

<Production of positive electrode>

Aluminum foil with a thickness of 20 μm was prepared as a current collector. The slurry composition for a positive electrode produced as described above was applied to the aluminum foil so that the coating amount after drying would be 22 mg/cm$^2$ per side. The coating on the aluminum foil was then dried for 20 minutes at 80 °C and for 20 minutes at 120 °C. Subsequently, the result was heat treated at 150 °C for 2 hours, to yield a web of positive electrode composed of a pre-pressing positive electrode mixed material layer and a current collector. The web of positive electrode was then roll pressed at a linear pressure of 1500 kg/cm, to produce a sheet-shaped positive electrode composed of a positive electrode mixed material layer of 3.2 g/cm$^3$ in density and aluminum foil. The volume resistance of the produced positive electrode was measured and evaluated according to the foregoing method. The results are shown in Table 1.

<Production of negative electrode>

90 parts of spherical artificial graphite (volume-average particle size: 12 μm) and 10 parts of SiO$_x$ (volume-average particle size: 10 μm) as a negative electrode active material, 1 part of styrene butadiene rubber (number-average particle diameter: 180 nm, glass-transition temperature: 10 °C) as a binder for a negative electrode, 1 part of carboxymethyl cellulose as a thickener, and an appropriate amount of deionized water were added and stirred in a planetary mixer to prepare a slurry composition for a negative electrode.

Next, copper foil with a thickness of 15 μm was prepared as a current collector. The slurry composition for a negative electrode produced as described above was applied to the copper foil so that the coating amount after drying would be 12 mg/cm$^2$ per side. The coating on the copper foil was then dried for 20 minutes at 50 °C and for 20 minutes at 110 °C. Subsequently, the result was heat treated at 150 °C for 2 hours, to yield a web of negative electrode. The web of negative electrode was then rolled by roll pressing to produce a sheet-shaped negative electrode composed of a negative electrode mixed material layer of 1.6 g/cm$^3$ in density and copper foil.

<Production of lithium ion secondary battery>

A lead wire was connected to each of the positive electrode and the negative electrode produced as described above. The positive electrode and the negative electrode were stacked with a separator (fine porous membrane of polypropylene) of 20 μm in thickness being interposed therebetween. Meanwhile, LiPF$_6$ as a supporting electrolyte was dissolved in a mixture of ethylene carbonate (EC):diethyl carbonate (DEC) = 3:7 (by mass) so as to be 1.0 M in concentration. Vinylene carbonate (VC) as an additive was added to the mixture having LiPF$_6$ dissolved therein so as to be 2 mass% in concentration, to prepare an electrolyte solution.

The laminate was housed in an aluminum laminate case along with 3.2 g of the electrolyte solution. The opening of the case was thermally sealed to yield a lithium ion secondary battery. The lithium ion secondary battery had a pouch-shape with a width of 35 mm, height of 48 mm, and thickness of 5 mm, and the nominal capacity was 40 mAh.

The produced lithium ion secondary battery was used to evaluate the output characteristics according to the foregoing method. The results are shown in Table 1.

(Example 2)

The operations, measurements, and evaluations were performed in the same way as in Example 1, except that, in the preparation of the polymer, the blending amount of acrylonitrile was changed to 6 parts and the blending amount of styrene was changed to 62 parts, the amount of palladium acetate as a hydrogenation reaction catalyst added in the first stage hydrogenation reaction was changed to 27 mg, and the hydrogenation reaction times in the first stage and the second stage were adjusted as appropriate so that the iodine value of the obtained polymer would be the value in Table 1. The results are shown in Table 1.

(Example 3)

The operations, measurements, and evaluations were performed in the same way as in Example 1, except that, in the preparation of the polymer, the blending amount of acrylonitrile was changed to 17 parts and the blending amount of styrene was changed to 51 parts, the amount of palladium acetate as a hydrogenation reaction catalyst added in the first stage hydrogenation reaction was changed to 27 mg, and the hydrogenation reaction times in the first stage and the second stage were adjusted as appropriate so that the iodine value of the obtained polymer would be the value in Table 1. The results are shown in Table 1.

(Example 4)

The operations, measurements, and evaluations were performed in the same way as in Example 1, except that, in the preparation of the polymer, the blending amount of styrene was changed to 65 parts and the blending amount of 1,3-butadiene was changed to 21 parts, the amount of palladium acetate as a hydrogenation reaction catalyst added in the first stage hydrogenation reaction was changed to 27 mg, and the hydrogenation reaction times in the first stage and the second stage were adjusted as appropriate so that the iodine value of the obtained polymer would be the value in Table 1. The results are shown in Table 1.

(Example 5)

The operations, measurements, and evaluations were performed in the same way as in Example 1, except that, in the preparation of the polymer, the hydrogenation reaction times in the first stage and the second stage were adjusted as appropriate so that the iodine value of the obtained polymer would be the value in Table 1. The results are shown in Table 1.

(Example 6)

The operations, measurements, and evaluations were performed in the same way as in Example 1, except that, in the preparation of the polymer, the amount of palladium acetate as a hydrogenation reaction catalyst added in the first stage hydrogenation reaction was changed to 10 mg, and the hydrogenation reaction times in the first stage and the second stage were adjusted as appropriate so that the iodine value of the obtained polymer would be the value in Table 1. The results are shown in Table 1.

(Example 7)

The operations, measurements, and evaluations were performed in the same way as in Example 1, except that, in the preparation of the polymer, the blending amount of styrene was changed to 55 parts, the blending amount of methacrylic acid was changed to 9 parts, and the blending amount of conjugated diene was changed to 25 parts, and the hydrogenation reaction times in the first stage and the second stage were adjusted as appropriate so that the iodine value of the obtained polymer would be the value in Table 1. The results are shown in Table 1.

(Comparative Example 1)

The operations, measurements, and evaluations were performed in the same way as in Example 1, except that, in the preparation of the polymer, the blending amount of acrylonitrile was changed to 20 parts, the blending amount of styrene was changed to 45 parts, the blending amount of methacrylic acid was changed to 5 parts, and the blending amount of conjugated diene was changed to 30 parts, and the hydrogenation reaction times in the first stage and the second stage were adjusted as appropriate so that the iodine value of the obtained polymer would be the value in Table 1. The results are shown in Table 1.

(Comparative Example 2)

The operations, measurements, and evaluations were performed in the same way as in Example 1, except that, in the preparation of the polymer, the blending amount of acrylonitrile was changed to 18 parts, the blending amount of styrene was changed to 70 parts, the blending amount of methacrylic acid was changed to 2 parts, and the blending amount of conjugated diene was changed to 10 parts, and the hydrogenation reaction times in the first stage and the second stage were adjusted as appropriate so that the iodine value of the obtained polymer would be the value in Table 1. The results are shown in Table 1.

In Table 1, "AN" denotes an acrylonitrile unit, "ST" denotes a styrene unit, "MAA" denotes a methacrylic acid unit, "H-BD" denotes a hydrogenated 1,3-butadiene unit, "BD" denotes a unit derived from a 1,3-butadiene monomer other than H-BD, "AB" denotes acetylene black, and "NCM" denotes $Li(Ni_{0.5}Co_{0.2}Mn_{0.3})O_2$.

[Table 1]

| | | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|---|
| Slurry composition for positive electrode | Polymer | Nitrile group-containing monomer unit | AN (mass%) | 11 | 6 | 17 | 11 | 11 | 11 | 11 | 20 | 18 |
| | | Aromatic vinyl monomer unit | ST (mass%) | 57 | 62 | 51 | 65 | 57 | 57 | 55 | 45 | 70 |
| | | Hydrophilic group-containing monomer unit | MAA (mass%) | 3 | 3 | 3 | 3 | 3 | 3 | 9 | 5 | 2 |
| | | Conjugated diene-derived unit (linear alkylene structural unit + conjugated diene unit) | (H-BD)+BD (mass%) | 29 | 29 | 29 | 21 | 29 | 29 | 25 | 30 | 10 |
| | | (AN/ST) ratio (-) | | 0.19 | 0.10 | 0.33 | 0.17 | 0.19 | 0.19 | 0.20 | 0.44 | 0.26 |
| | | ({(H-BD)+BD}/ST) ratio (-) | | 0.51 | 0.47 | 0.57 | 0.32 | 0.51 | 0.51 | 0.45 | 0.67 | 0.14 |
| | | Iodine value (mg/100mg) | | 15 | 35 | 35 | 35 | 9 | 75 | 15 | 9 | 10 |
| | | Glass-transition temperature (°C) | | 24 | 22 | 25 | 40 | 20 | 26 | 33 | 24 | 75 |
| | | Degree of swelling in electrolyte solution (%) | | 280 | 240 | 290 | 350 | 250 | 340 | 330 | 310 | 510 |
| | | Blending amount (parts by mass) | | 2.1 | 2.1 | 2.1 | 2.1 | 2.1 | 2.1 | 2.1 | 2.1 | 2.1 |

(continued)

| | | | Example 1 | Example 2 | Example 3 | Example 4 | Example 5 | Example 6 | Example 7 | Comparative Example 1 | Comparative Example 2 |
|---|---|---|---|---|---|---|---|---|---|---|---|
| | Conductive material | AB (parts by mass) | 2.1 | 2.1 | 2.1 | 2.1 | 2.1 | 2.1 | 2.1 | 2.1 | 2.1 |
| | Positive electrode active material | NCM (parts by mass) | 100 | 100 | 100 | 100 | 100 | 100 | 100 | 100 | 100 |
| Evaluation | Degree of swelling in electrolyte solution of polymer | | A | A | A | B | A | B | B | B | D |
| | Viscosity of slurry composition | | A | A | B | A | B | A | B | C | B |
| | Volume resistance of positive electrode | | A | A | B | A | B | A | A | D | B |
| | Output characteristics of secondary battery | | A | B | A | B | A | B | B | C | D |

As can be understood from Table 1, the polymer contained in the binder composition in each of Examples 1 to 7 had a low degree of swelling in electrolyte solution, and was capable of adjusting the viscosity of the prepared slurry composition to the appropriate range. The electrode obtained in each of Examples 1 to 7 had a low volume resistance, and the output characteristics of the secondary battery including the electrode were high.

On the other hand, in Comparative Example 1 in which the content proportion of the aromatic vinyl monomer unit in the polymer was less than 50.0 mass% and Comparative Example 2 in which the content proportion of the aromatic vinyl monomer unit in the polymer was more than 65.0 mass%, favorable attributes achieved in Examples 1 to 7 could not be achieved.

INDUSTRIAL APPLICABILITY

It is therefore possible to provide a binder composition for a secondary battery positive electrode containing a polymer that has an adequate degree of swelling in electrolyte solution and is capable of adjusting, in the case of preparing a slurry composition, the viscosity of the obtained slurry composition to an appropriate range.

It is also possible to provide a slurry composition for a secondary battery positive electrode that has appropriate viscosity and can be used in formation of a secondary battery excellent in output characteristics, and a production method therefor.

It is also possible to provide a positive electrode capable of improving the output characteristics of a secondary battery, and a secondary battery excellent in output characteristics.

**Claims**

1. A binder composition for a secondary battery positive electrode, comprising
a polymer containing a nitrile group-containing monomer unit, an aromatic vinyl monomer unit, a hydrophilic group-containing monomer unit, and a linear alkylene structural unit having a carbon number of 4 or more,
wherein the polymer contains the aromatic vinyl monomer unit in a proportion of more than 50.0 mass% and 65.0 mass% or less.

2. The binder composition for a secondary battery positive electrode according to claim 1, wherein the polymer contains the nitrile group-containing monomer unit in a proportion of 3.0 mass% or more and 30.0 mass% or less.

3. The binder composition for a secondary battery positive electrode according to claim 1 or 2, wherein the polymer contains an acidic group-containing monomer unit as the hydrophilic group-containing monomer unit in a proportion of 0.1 mass% or more and 20.0 mass% or less.

4. The binder composition for a secondary battery positive electrode according to any of claims 1 to 3, wherein a glass-transition temperature of the polymer is 10 °C or more and 60 °C or less.

5. The binder composition for a secondary battery positive electrode according to any of claims 1 to 4, wherein an iodine value of the polymer is 5 mg/100 mg or more and 80 mg/100 mg or less.

6. A slurry composition for a secondary battery positive electrode, comprising:

    a positive electrode active material;
    a solvent; and
    the binder composition for a secondary battery positive electrode according to any of claims 1 to 5.

7. A positive electrode for a secondary battery, comprising
a positive electrode mixed material layer formed using the slurry composition for a secondary battery positive electrode according to claim 6.

8. A secondary battery, comprising:

    the positive electrode for a secondary battery according to claim 7;
    a negative electrode;
    an electrolyte solution; and
    a separator.

9. A production method for a slurry composition for a secondary battery positive electrode, comprising, in the stated order:

mixing a positive electrode active material and a conductive material to obtain a positive electrode active material-conductive material mixture;

adding the binder composition for a secondary battery positive electrode according to any of claims 1 to 5 to the positive electrode active material-conductive material mixture, to obtain a positive electrode active material-conductive material-binder mixture; and

adding a solvent to the positive electrode active material-conductive material-binder mixture to mix the solvent and the positive electrode active material-conductive material-binder mixture.

## INTERNATIONAL SEARCH REPORT

| | International application No. |
|---|---|
| | PCT/JP2018/046076 |

### A. CLASSIFICATION OF SUBJECT MATTER

Int.Cl. H01M4/62(2006.01)i, C08F212/10(2006.01)i, H01M4/13(2010.01)i, H01M4/139(2010.01)i, H01M10/0566(2010.01)i, H01M10/052(2010.01)n

According to International Patent Classification (IPC) or to both national classification and IPC

### B. FIELDS SEARCHED

Minimum documentation searched (classification system followed by classification symbols)
Int.Cl. H01M4/62, C08F212/10, H01M4/13, H01M4/139, H01M10/0566, H01M10/052

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2016/24383 A1 (ZEON CORPORATION) 18 February 2016, claims, paragraphs [0053]-[0075], [0081], examples <br> & US 2017/0214050 A1, claims, paragraphs [0089]-[0123], [0137], examples & EP 3182489 A1 & CN 106575770 A & KR 10-2017-0081635 A | 1-9 |
| Y | JP 2010-140684 A (NIPPON A&L INC.) 24 June 2010, claims, paragraphs [0007]-[0014], [0025], examples (Family: none) | 1-9 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25.01.2019 | 05.02.2019 |

| Name and mailing address of the ISA/ | Authorized officer |
|---|---|
| Japan Patent Office <br> 3-4-3, Kasumigaseki, Chiyoda-ku, <br> Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/046076 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2010-146869 A (NIPPON A&L INC.) 01 July 2010, claims, paragraphs [0006]-[0019], [0031], examples (Family: none) | 1-9 |
| Y | JP 2011-108373 A (NIPPON A&L INC.) 02 June 2011, claims, paragraphs [0030], [0031], [0037], examples (Family: none) | 1-9 |
| Y | JP 2012-212537 A (NIPPON A&L INC.) 01 November 2012, claims, paragraphs [0009]-[0014], [0030], examples (Family: none) | 1-9 |
| Y | JP 2013-77533 A (TOKYO UNIVERSITY OF SCIENCE) 25 April 2013, claims, paragraphs [0016]-[0021], [0054], examples (Family: none) | 1-9 |
| Y | JP 2013-8485 A (ZEON CORPORATION) 10 January 2013, claims, paragraphs [0038], [0042], [0043], examples (Family: none) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013179040 A
- WO 2012165120 A1
- WO 2013080989 A1
- JP 2013008485 A
- JP 2012204303 A